(19) Europäisches Patentamt
European Patent Office
Office européen des brevets

(11) EP 3 820 756 B1

(12) **FASCICULE DE BREVET EUROPEEN**

(45) Date de publication et mention de la délivrance du brevet:
**17.01.2024 Bulletin 2024/03**

(21) Numéro de dépôt: **19740330.6**

(22) Date de dépôt: **09.07.2019**

(51) Classification Internationale des Brevets (IPC):
***B60W 50/00** (2006.01)*

(52) Classification Coopérative des Brevets (CPC):
**B60W 50/00; B60W 30/0953;** B60W 2050/0001; B60W 2050/0013; B60W 2050/0014; B60W 2050/0017; B60W 2050/0018; B60W 2050/0024; B60W 2050/0025; B60W 2050/0033; B60W 2520/00; B60W 2520/10; B60W 2530/10; B60W 2530/20

(86) Numéro de dépôt international:
**PCT/EP2019/068426**

(87) Numéro de publication internationale:
**WO 2020/011794 (16.01.2020 Gazette 2020/03)**

(54) **PROCÉDÉ D'ÉLABORATION D'UNE CONSIGNE DE COMMANDE PRÉDICTIVE APTE À ÊTRE IMPLANTÉE DANS UNE UNITÉ DE COMMANDE DE TRAJECTOIRE D'UN VÉHICULE AUTOMOBILE**

VERFAHREN ZUR ENTWICKLUNG EINES PRÄDIKTIVEN BEFEHLS, DER IN EINER EINHEIT ZUR STEUERUNG DER TRAJEKTORIE EINES KRAFTFAHRZEUGS IMPLANTIERT WERDEN KANN

METHOD FOR DEVELOPING A PREDICTIVE COMMAND THAT CAN BE IMPLANTED IN A UNIT FOR CONTROLLING THE TRAJECTORY OF A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.07.2018 FR 1856516**

(43) Date de publication de la demande:
**19.05.2021 Bulletin 2021/20**

(73) Titulaire: **Renault s.a.s**
**92100 Boulogne Billancourt (FR)**

(72) Inventeurs:
- **QUILLIARD, Raphael**
  **91300 Massy (FR)**
- **PEYRET, Maud**
  **75014 Paris (FR)**
- **SALIOU, Sebastien**
  **35000 Rennes (FR)**
- **BOT, Ludovic**
  **35000 Rennes (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
**DE-A1-102008 042 924**

- **Tilman Bünte ET AL: "Robust vehicle steering control design based on the disturbance observer", Annual Reviews in Control, 1 janvier 2002 (2002-01-01), pages 139-149, XP055546225, DOI: 10.1016/S1367-5788(02)80024-4 Extrait de l'Internet: URL:https://ac.els-cdn.com/S1367578802800244/1-s2.0-S1367578802800244-main.pdf?_tid=6f72970d-9791-4bf4-af6e-8cdf863cde3c&acdnat=1548176023_ddc8033b935c25699b098d285b09e365 [extrait le 2019-01-23]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 820 756 B1

- Adnan Shaout ET AL: "A nonlinear optimal four wheels steering controller", Proceedings of the 43rd IEEE Midwest Symposium on Circuits and Systems (Cat.No.CH37144), 1 septembre 2017 (2017-09-01), pages 1426-1429, XP055546714, New York DOI: 10.1109/MWSCAS.2000.951481 Extrait de l'Internet: URL:https://ieeexplore.ieee.org/ielx5/7554/20575/00951481.pdf?tp=&arnumber=951481&isnumber=20575 [extrait le 2019-01-23]
- LGHANI MENHOUR ET AL: "Vehicle control based on a LPV control and a nonlinear control to detect critical driving situation due to high dynamic loads", 2012 15TH INTERNATIONAL IEEE CONFERENCE ON INTELLIGENT TRANSPORTATION SYSTEMS, 1 septembre 2012 (2012-09-01), pages 1327-1332, XP055546624, DOI: 10.1109/ITSC.2012.6338857 ISBN: 978-1-4673-3062-6

## Description

DOMAINE TECHNIQUE AUQUEL SE RAPPORTE L'INVENTION

La présente invention concerne de manière générale la commande de trajectoire d'un véhicule automobile, afin en particulier de maintenir le véhicule automobile dans une voie de circulation.

L'invention s'applique plus précisément au domaine des véhicules autonomes.

Elle concerne plus particulièrement un procédé d'élaboration d'une consigne de commande prédictive apte à être implantée dans une unité de commande de trajectoire d'un véhicule automobile.

ARRIERE-PLAN TECHNOLOGIQUE

Les véhicules automobiles autonomes sont prévus pour rouler sur des routes ouvertes sans intervention d'un conducteur. Ils sont équipés pour cela d'une série de capteurs numériques permettant d'acquérir des données sur l'environnement du véhicule ainsi que de logiciels permettant d'analyser ces données en temps réel. Ces logiciels utilisent des algorithmes permettant ensuite de générer des commandes afin de diriger le véhicule automobile.

En particulier, on connait du document FR3050161 une loi de commande permettant de maintenir le véhicule dans sa voie de circulation. D'après ce document, cette loi de commande est divisée en deux parties : une première partie d'observation qui permet, à partir de grandeurs mesurées, d'estimer certains paramètres utiles pour la loi de commande et une deuxième partie de régulation qui permet, à partir de ces paramètres estimés, de calculer l'angle à appliquer au volant pour aligner le véhicule par rapport au centre de la voie.

L'article "Dynamic Curvature Path Tracking Control for Autonomous Vehicle: Experimental Results" par M. Zakaria e. al. montre un suivit de trajectoire pour un véhicule et ajuste les gains d'une loi de commande latérale en se basant sur des résultats de simulations. Les articles "A Nonlinear Optimal Four Wheels Steering Controller" par A. Shaout et. al et "Vehicle control based on a LPV control and a nonlinear control to detect critical driving situation due to high dynamic loads" par L. Menhour et. al montre le séquencement de gains pour le control de braquage. H

Le document FR3050161 décrit en particulier un outil de simulation visant à optimiser la performance de cette loi de commande, c'est-à-dire son temps de réaction, afin de maintenir le véhicule dans sa voie.

La demanderesse s'est toutefois aperçue que, parfois, cette loi de commande ne permettait pas d'assurer un bon maintien du véhicule dans sa voie.

OBJET DE L'INVENTION

La présente invention propose d'améliorer l'outil de simulation afin d'assurer le maintien du véhicule dans sa voie de circulation en toutes circonstances.

Plus particulièrement, on propose selon l'invention un procédé d'élaboration d'une consigne de commande prédictive apte à être implantée dans une unité de commande de trajectoire d'un véhicule automobile, le procédé comprenant, pour au moins une vitesse de déplacement donnée du véhicule automobile sur une voie de circulation, des étapes de :

- détermination d'une pluralité de données de régulation, chaque donnée de régulation permettant, à partir d'au moins une donnée d'entrée, de générer la consigne de commande qui satisfait un paramètre de robustesse, et chaque donnée de régulation étant associée à une configuration d'utilisation particulière dudit véhicule automobile,
- identification d'au moins une donnée de régulation parmi la pluralité de données de régulation déterminées, en fonction d'un résultat d'une simulation de trajectoire du véhicule automobile sur la voie de circulation, et
- utilisation de ladite au moins une donnée de régulation identifiée pour la commande de trajectoire dudit véhicule automobile.

D'après l'invention, la donnée de régulation choisie pour générer la consigne de commande est déterminée pour satisfaire un paramètre de robustesse permettant ainsi d'assurer la stabilité de la commande vis-à-vis de perturbations. Ces perturbations peuvent en particulier provenir de configurations d'utilisation différentes du véhicule automobile (coffre plus ou moins chargé, présence de pneus neige...). La consigne de commande est alors satisfaisante même dans le cas de configurations perturbant le véhicule.

D'autres caractéristiques non limitatives et avantageuses du procédé d'élaboration d'une consigne de commande prédictive conforme à l'invention, prises individuellement ou selon toutes les combinaisons techniquement possibles, sont les suivantes :

- le paramètre de robustesse comprend une marge de phase ou une marge de gain ou une marge de retard ;

- il est prévu à l'étape d'identification les étapes de :

  - projection de la pluralité de données de régulation déterminées sur un espace défini par un paramètre de robustesse et par un paramètre de performance,
  - sélection d'au moins une donnée de régulation parmi la pluralité de données de régulation déterminées projetées, en fonction de leur projection sur ledit espace, de manière à satisfaire au moins un critère de sélection pour le paramètre de robustesse et/ou pour un paramètre de performance ;

- le critère de sélection privilégie le paramètre de performance par rapport au paramètre de robustesse ;
- le critère de sélection privilégie le paramètre de robustesse par rapport au paramètre de performance ;
- le critère de sélection est défini comme un compromis entre le paramètre de robustesse et le paramètre de performance ;
- la donnée de régulation identifiée est choisie de manière à ce que la consigne de commande soit la moins sensible à des changements de configuration d'utilisation du véhicule automobile ;
- au moins deux configurations d'utilisation différentes du véhicule automobile sont associées à des poids de chargement ou à des répartitions de poids de chargement différents dans ledit véhicule automobile ;
- au moins deux configurations d'utilisation différentes du véhicule automobile sont associés à la présence d'équipements différents sur ledit véhicule ; et
- il est prévu à l'étape d'utilisation d'implanter la consigne de commande prédictive dans l'unité de commande du véhicule automobile.

DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 représente une vue schématique d'une partie d'un véhicule automobile ;
- la figure 2 représente un schéma fonctionnel en boucle fermée d'un procédé de commande de trajectoire du véhicule automobile ;
- les figures 3 à 5 représentent un exemple d'espace utilisé pour mettre en oeuvre le procédé d'élaboration d'une consigne de commande prédictive conforme à l'invention, avec trois critères de sélection différents ;
- la figure 6 représente un schéma fonctionnel en boucle ouverte du procédé de commande de trajectoire du véhicule automobile ;
- la figure 7 représente la courbe de gain d'un diagramme de Bode d'une fonction de transfert identifiée dans le procédé de commande de trajectoire du véhicule automobile ;
- la figure 8 représente la courbe de phase du diagramme de Bode d'une fonction de transfert identifiée dans le procédé de commande de trajectoire du véhicule automobile ; et
- la figure 9 est une représentation du modèle « bicyclette » appliqué au véhicule automobile se déplaçant dans une voie de circulation.

Sur la figure 1, on a représenté un véhicule automobile 1 (également appelé dans la suite « véhicule 1 »). Classiquement ce véhicule automobile 1 comporte quatre roues 3, un châssis qui supporte notamment un groupe motopropulseur (à savoir un moteur et des moyens de transmission du couple moteur aux roues motrices), une colonne de direction, des éléments de carrosserie, et des éléments d'habitacle.

Comme représenté sur la figure 1, le véhicule 1 comprend également une unité de commande 5. L'unité de commande 5 permet de contrôler et commander différents organes du véhicule 1. Par exemple, l'unité de commande 5 peut recevoir des informations en provenance de différents capteurs numériques présents dans le véhicule 1, comme un capteur de vitesse ou un capteur mesurant un couple dont la valeur peut ensuite être convertie en un angle de braquage des roues avant du véhicule 1.

L'unité de commande 5 peut également commander un actionneur couplé à la colonne de direction du véhicule 1 en lui communiquant par exemple une consigne de commande. L'unité de commande 5 comporte pour cela un dispositif de contrôle 10. Le dispositif de contrôle 10 est adapté à générer la consigne de commande. Par exemple, dans le cas d'un véhicule autonome, le dispositif de contrôle 10 permet de générer une consigne de commande de trajectoire afin d'assurer l'orientation ou le maintien du véhicule 1 dans une voie de circulation.

La trajectoire du véhicule 1 est modélisée ici par un modèle dit « bicyclette ». La figure 9 est une représentation du modèle « bicyclette » appliqué au véhicule 1 se déplaçant dans une voie de circulation. Dans le cadre de ce modèle, le véhicule 1 est modélisé par un cadre et deux roues (comme pour une bicyclette) : la roue avant 3a et la roue arrière 3b.

Les variables considérées dans ce modèle sont les suivantes :

- une vitesse de lacet, notée $\dot{\psi}$, du véhicule 1, correspondant à la vitesse de rotation du véhicule 1 autour de son centre de gravité G selon un axe vertical,
- un angle de cap, noté $\psi$, correspondant à l'angle entre l'axe longitudinal du véhicule 1 et la tangente à la trajectoire,
- une vitesse latérale du véhicule 1, notée $\dot{y}$, liée à l'éloignement du centre de gravité G du véhicule 1 par rapport à une trajectoire idéale $I_d$,
- un écart latéral, noté y, correspondant à l'écart entre le centre de gravité G du véhicule 1 et la trajectoire idéale $I_d$,
- une vitesse de rotation, notée $\dot{\delta}$, de la roue avant 3a par rapport à l'axe vertical,
- un angle, noté $\delta$, de la roue avant 3a, c'est-à-dire l'angle que fait la roue avant 3a avec l'axe longitudinal du véhicule 1, et
- une intégrale d'erreur de position, $\int -ydt$, qui correspond à l'intégrale temporelle des écarts du centre de gravité G du véhicule 1 par rapport à la trajectoire idéale $I_d$ sur laquelle il devrait être.

Le véhicule 1 est donc représenté par une donnée X communément appelée vecteur d'état, définie par :

$$X = \begin{pmatrix} \dot{\psi} \\ \psi \\ \dot{y} \\ y \\ \dot{\delta} \\ \delta \\ \int -ydt \end{pmatrix}$$

D'après le modèle « bicyclette », l'équation de la trajectoire du véhicule 1 est donnée par : $\dot{X} = AX + B\delta_{req} + B_\rho \rho$, avec :

- $\delta_{req}$ une consigne d'angle sur la roue avant 3a (donc une consigne de commande) afin que le véhicule 1 maintienne ou se rapproche de la trajectoire idéale $I_d$ dans la voie de circulation,
- $\rho$ la courbure de la voie de circulation, qui sera considérée comme nulle dans la suite de cet exposé,
- $B_\rho$ une donnée de perturbation (en particulier liée à la courbure de la voie de circulation), et
- $A$ une donnée représentative de la relation dynamique avec la donnée d'état $X$.

On considérera ici que :

$$A = \begin{pmatrix} -\frac{\left(c_f l_f^2 + c_r l_r^2\right)}{I_z v} & \frac{\left(c_f l_f - c_r l_r\right)}{I_z} & -\frac{\left(c_f l_f - c_r l_r\right)}{I_z v} & 0 & 0 & \frac{\left(c_f l_f\right)}{I_z} & 0 \\ 1 & 0 & 0 & 0 & 0 & 0 & 0 \\ \frac{\left(cf\ l_f - c_r l_r\right)}{mv} & \frac{\left(c_f + c_r\right)}{m} & -\frac{\left(c_f + c_r\right)}{mv} & 0 & 0 & \frac{c_f}{m} & 0 \\ 0 & 0 & 1 & 0 & 0 & 0 & 0 \\ 0 & 0 & 0 & 0 & -2\zeta\omega & -2\omega^2 & 0 \\ 0 & 0 & 0 & 0 & 1 & 0 & 0 \\ 0 & 0 & 0 & -1 & 0 & 0 & 0 \end{pmatrix},$$

avec $c_f$ et $c_r$ les rigidités des trains avant et arrière du véhicule 1, $l_f$ et $l_r$ les distances respectives entre le centre de gravité G du véhicule et le train avant et entre le centre de gravité G du véhicule 1 et le train arrière 1 (ces distances sont représentées sur la figure 9), m la masse du véhicule 1 et $v$ la vitesse du véhicule 1 selon la direction longitudinale (aussi appelée vitesse de déplacement du véhicule 1 dans la suite).

Dans le cadre du modèle « bicyclette », une donnée de mesure Y est également exprimée en fonction de la donnée d'état $X$ par la relation : $Y = C.X$ avec C une donnée comprenant les mesures accessibles grâce aux différents

capteurs numériques inclus dans le véhicule 1.

Pour des détails supplémentaires sur ce modèle « bicyclette », il est conseillé de se reporter au document FR3050161.

Ce modèle est ensuite utilisé dans une loi de commande de la trajectoire du véhicule 1, enregistrée par exemple dans l'unité de commande 5. Cette loi de commande permet, par exemple, de maintenir le véhicule 1 au centre de la voie de circulation.

La figure 2 représente un schéma fonctionnel en boucle fermée de cette loi de commande. En d'autres termes, la figure 2 représente un schéma fonctionnel d'un procédé de commande de trajectoire du véhicule 1.

Sur cette figure 2, $X_{ref}$ correspond à la trajectoire idéale du véhicule 1 dans sa voie de circulation. En pratique, il s'agit souvent de la trajectoire passant par le centre de la voie de circulation empruntée par le véhicule 1. Cette trajectoire idéale est celle que l'unité de commande 5 souhaite faire atteindre (ou maintenir) par le véhicule 1.

Pour cela, la loi de commande se présente sous forme d'un procédé bouclé. D'après la figure 2, l'état du véhicule 1, et en particulier la trajectoire du véhicule 1, est donné par un élément 22. Cet élément 22 est en pratique lié à l'unité de commande 5 qui va commander la trajectoire du véhicule 1 de manière à satisfaire les équations (sur la donnée d'état $X$ et la donnée de mesure $Y$) issues du modèle « bicyclette » précédemment décrit en respectant la consigne d'angle sur la roue $\delta_{req}$.

Le schéma fonctionnel représenté sur la figure 2 montre également la présence d'un élément 25 observateur. Cet élément 25 permet de fournir une estimation de l'état du véhicule 1. En pratique, l'élément 25 est lié aux différents capteurs numériques présents dans le véhicule 1 et reçoit donc toutes les mesures concernant le véhicule 1.

L'élément 25 reçoit également de l'élément 22 les informations transmises par l'unité de commande 5 concernant la commande de trajectoire.

L'élément 25 génère ensuite une trajectoire estimée du véhicule 1 par l'intermédiaire d'une donnée estimée $\hat{X}$. Pour cela, l'élément 25 génère une donnée d'observation $L_P$ qui regroupe les mesures concernant le véhicule 1 ainsi que des variables nécessaires à la définition de la loi de commande et estimées à partir de ces mesures. La donnée d'observation $L_P$ dépend de la vitesse de déplacement du véhicule 1.

En d'autres termes, une donnée d'observation $L_P$ est déterminée par vitesse de déplacement du véhicule 1 considérée (en pratique, on considère un nombre fini de vitesses de déplacement dites « de référence » et on réalise une interpolation pour obtenir la donnée d'observation correspondant aux autres vitesses, les vitesses de références étant ici réparties de manière uniforme, excepté à basse vitesse - moins de 30 km/h - ou un plus grand nombre de valeurs est utilisé pour assurer un réglage plus fin). La donnée estimée $\hat{X}$ vérifie finalement l'équation suivante :

$$\dot{\hat{X}} = (A - L_p C)\hat{X} + B\delta_{req} + L_p Y$$

Comme représenté sur la figure 2, la donnée estimée $\hat{X}$ est ensuite comparée à la trajectoire idéale $X_{ref}$. L'écart entre l'estimation de trajectoire et la trajectoire idéale est traité au niveau d'un élément 20. Cet élément 20 est adapté à générer une nouvelle consigne de commande, par exemple une nouvelle consigne de commande concernant l'angle de la roue avant $\delta_{req}$. Pour cela, l'élément 20 s'appuie sur une donnée de régulation Ks. La nouvelle consigne de commande de l'angle de la roue avant $\delta_{req}$ est obtenue en multipliant l'écart entre l'estimation de trajectoire $\hat{X}$ et la trajectoire idéale $X_{ref}$ par la donnée de régulation Ks. La nouvelle consigne de commande dépend donc de la donnée de régulation Ks. Cette donnée de régulation Ks s'exprime en pratique sous la forme d'une matrice.

La donnée de régulation Ks est dépendante de la vitesse observée par le véhicule 1. En d'autres termes, la loi de commande illustrée sur la figure 2 utilise différentes valeurs de donnée de régulation Ks, chacune de ces valeurs étant associées à une vitesse de déplacement du véhicule 1.

Les valeurs de la donnée de régulation Ks, associées à chacune des vitesses de déplacement considérées, sont déterminées lors de la conception du véhicule 1. Elles sont donc fixées avant l'utilisation du véhicule 1. La consigne de commande de l'angle de la roue avant $\delta_{req}$ générée à partir de la donnée de régulation Ks est donc qualifiée de prédictive.

L'invention vise ici à déterminer des valeurs pour la donnée de régulation Ks qui permettent de garantir à la loi de commande de bonnes performances (notamment un bon temps de réaction) et une bonne robustesse (c'est-à-dire une bonne stabilité vis-à-vis de perturbations).

Les perturbations sont notamment des changements de configurations d'utilisation du véhicule 1.

Ces configurations d'utilisation du véhicule 1 correspondent aux différents paramètres qui peuvent varier sur le véhicule 1 et qui ont une influence sur la trajectoire du véhicule. Par exemple, des configurations d'utilisation différentes du véhicule 1 peuvent être associées à des poids différents de chargement du véhicule 1. Il peut par exemple s'agir des différences de poids entre un véhicule comprenant uniquement un conducteur et un véhicule comprenant cinq personnes dans l'habitacle. Il peut aussi s'agir d'une répartition de poids de chargement différents dans le véhicule 1, par exemple en considérant un coffre chargé, un coffre de toit installé sur le véhicule 1 ou la présence d'une remorque tractée à l'arrière de ce véhicule 1. Les configurations d'utilisation différentes du véhicule 1 peuvent également être associées à

l'utilisation d'équipements différents. Par exemple, il peut être question de l'utilisation de pneus adaptés à des conditions météorologiques particulières comme des pneus neige.

Les différentes conditions d'utilisation du véhicule automobile ont un impact sur les paramètres caractéristiques du véhicule automobile, en particulier sur les rigidités des trains avant et arrière et sur la masse (et donc le poids) du véhicule automobile. Comme présenté précédemment, ces grandeurs interviennent dans l'équation de détermination de la trajectoire du véhicule (via la donnée *A* représentative de la relation dynamique avec la donnée d'état *X).* Les données de régulation Ks doivent donc également tenir compte de ces configurations d'utilisation (pour chaque vitesse de déplacement).

Le procédé d'élaboration d'une consigne de commande prédictive tel que décrit dans la présente invention vise à optimiser la détermination de la donnée de régulation Ks afin d'assurer la robustesse de la loi de commande en toute circonstance, tout en conservant sa performance d'exécution.

En d'autres termes, l'invention cherche à déterminer, pour chaque vitesse de déplacement considérée du véhicule, une donnée de régulation Ks qui soit la moins sensible possible aux changements de conditions d'utilisation du véhicule automobile, et qui soit en outre performante en termes de temps de réaction.

Le procédé conforme à l'invention est mis en oeuvre pour chaque vitesse de déplacement du véhicule 1 considérée. Il est mis en oeuvre lors de la conception du véhicule 1 (en amont donc de son utilisation sur une voie de circulation).

Il débute par une étape de détermination d'une pluralité de données de régulation Ks pour la vitesse de déplacement considérée du véhicule 1. Chaque donnée de régulation Ks est associée à une configuration d'utilisation du véhicule 1 différente. Par exemple, pour une vitesse de déplacement du véhicule 1 égale à 70 km/h, une première donnée de régulation $K_{S1}$ est déterminée pour une configuration correspondant à la seule présence du conducteur dans le véhicule 1, une deuxième donnée de régulation $K_{S2}$ est déterminée pour une configuration correspondant à la présence de cinq individus dans le véhicule 1, etc.

De manière concrète, un algorithme d'optimisation est utilisé pour générer cette pluralité de données de régulation Ks. Un ensemble de paramètres est introduit en entrée de cet algorithme. Cet ensemble de paramètres comprend des paramètres dits de robustesse et des paramètres dits de performance. Les paramètres de performance impactent la dynamique de régulation de la trajectoire du véhicule 1. Les paramètres de robustesse caractérisent la marge restante dans la loi de commande avant que la boucle de régulation présentée sur le schéma fonctionnel de la figure 2 ne soit instable.

On notera ici que l'algorithme d'optimisation utilisé suit un plan d'expérience obtenu en réalisant des simulations successives. A l'issue de chaque simulation, les scores obtenus pour chaque paramètre sont calculés. L'algorithme oriente ensuite les simulations suivantes pour obtenir de meilleurs scores ou des scores pas encore explorés (compromis entre exploration et intensification).

Parmi les paramètres de robustesse, on distingue par exemple une marge de phase, une marge de retard ou une marge de gain d'une fonction de transfert H (qui sera précisée dans la suite de cet exposé). Parmi les paramètres de performance, on distingue par exemple l'écart latéral y entre le centre de gravité du véhicule 1 et la trajectoire idéale ou l'angle $\delta$ de la roue avant.

Chaque donnée de régulation Ks correspond à un ensemble de paramètres particuliers (en plus d'être associé à une vitesse de déplacement spécifique et à une configuration d'utilisation du véhicule 1 spécifique).

Le procédé de l'invention se poursuit avec la projection de la pluralité de données de régulation Ks sur un espace à deux dimensions. Cet espace est défini à partir d'un paramètre de performance sélectionné et d'un paramètre de robustesse sélectionné. Les figures 3 à 5 représentent un exemple d'un tel espace dans lequel le paramètre de robustesse noté $a_1$ est placé sur l'axe des abscisses et le paramètre de performance noté $b_1$ est placé sur l'axe des ordonnées.

Les différents points présents sur cet espace correspondent à un couple de paramètres $a_1$ et $b_1$ particulier, lié en particulier à une configuration d'utilisation du véhicule 1 différente.

Par exemple ici, le paramètre $a_1$ correspond à la marge de retard et le paramètre $b_1$ correspond à l'écart latéral y entre le centre de gravité G du véhicule 1 et la trajectoire idéale $I_d$.

Le procédé se poursuit ensuite avec l'identification d'au moins une donnée de régulation parmi celles projetées sur l'espace défini. Cette identification s'effectue de manière à satisfaire au moins un critère de sélection pour le paramètre de robustesse sélectionné et/ou pour le paramètre de performance sélectionné. Cette méthode, visant à déterminer une donnée optimale par rapport à un critère de sélection défini, est classiquement connue sous le nom d'« optimisation de Pareto ».

Dans le cadre de ce procédé, le critère de sélection correspond à la satisfaction d'un critère de performance et d'un critère de robustesse. Le critère de performance repose par exemple sur un principe consistant à limiter le temps de retour au centre de la voie ou à optimiser le temps de maintien du véhicule 1 dans sa voie de circulation ou à minimiser la moyenne de la valeur absolue de l'écart latéral y entre le centre de gravité du véhicule 1.

Le critère de robustesse repose quant à lui sur l'optimisation de l'une des marges utilisées classiquement pour

évaluer la robustesse en stabilité d'une boucle de régulation.

Les marges de gain, de phase et de retard sont des valeurs numériques positives qui permettent d'évaluer la robustesse en stabilité d'un système à partir de l'analyse du transfert de boucle noté H. Plus les marges sont grandes, plus robuste est la stabilité. La marge de gain correspond au gain supplémentaire maximum que l'on peut donner au système en boucle ouverte sans risquer de le rendre instable en boucle fermée. La marge de retard correspond au retard supplémentaire maximum que l'on peut donner au système en boucle ouverte sans risquer de le rendre instable en boucle fermée. Le critère de robustesse à optimiser consiste donc à maximiser la marge de gain, la marge de phase et la marge de retard.

Le critère de robustesse doit pour autant permettre de conserver les performances de la régulation liées au critère de performance défini ci-dessus.

Les figures 3 à 5 présentent trois identifications de données de régulation Ks en fonction de trois critères de sélection différents.

Sur la figure 3, le critère de sélection privilégie un critère de performance par rapport au critère de robustesse. Ce critère de sélection vise à approcher le paramètre de performance d'une valeur maximale. Pour autant, la méthode d'optimisation (de Pareto) permet d'assurer une robustesse minimale par l'identification de la donnée de régulation Ks.

Sur la figure 4, le critère de sélection privilégie un critère de robustesse par rapport au critère de performance. Ce critère de sélection vise à approcher le paramètre de robustesse d'une valeur maximale. Pour autant, la méthode d'optimisation (de Pareto) permet là aussi d'assurer une performance minimale par l'identification de la donnée de régulation Ks.

Enfin sur la figure 5, le critère de sélection est défini comme un compromis entre le critère de robustesse et le critère de performance. Dans ce cas, la donnée de régulation Ks identifiée ne considère ni un paramètre de performance maximal ni un paramètre de robustesse maximal, mais une valeur moyenne pour chacun.

Le procédé se poursuit ensuite par le test des trois données de régulation Ks identifiées par projection graphique. Ces trois données de régulation sont considérées comme intéressantes vis-à-vis de critères de sélection pertinents. Ce test est réalisé en utilisant une simulation numérique se basant sur un modèle de véhicule simplifié. Une consigne de commande de la trajectoire du véhicule sur la voie de circulation est générée à partir de chaque donnée de régulation précédemment identifiée. Chaque consigne de commande est ensuite implantée dans l'unité de commande du véhicule (du modèle) afin d'évaluer chaque donnée de régulation. Ce test numérique vise en particulier à évaluer la manière dont la performance est dégradée lorsque la robustesse est privilégiée.

A l'issue de cette simulation numérique, au moins une donnée de régulation Ks est identifiée parmi celles qui ont été sélectionnées à l'issue de l'étape de projection précédemment décrite.

Le procédé comporte ensuite une étape dite de validation des données de régulation identifiées. Cette étape de validation permet de tester en conditions réelles les consignes de commande issues des données de régulation Ks identifiées à l'issue de la simulation numérique réalisée afin de déterminer la donnée de régulation qui sera finalement concrètement utilisée pour définir la consigne de commande de trajectoire du véhicule 1 dans la loi de commande.

Cette mise en condition consiste à tester sur route chaque consigne de commande issue de chaque donnée de régulation identifiée lors de la simulation numérique. Chaque consigne de commande est donc à cet effet implantée dans l'unité de commande 5 du véhicule 1, lequel véhicule est mis ensuite en circulation sur route. Lors de cette étape de validation, chaque donnée de régulation (donc chaque consigne de commande) est testée pour différentes conditions d'utilisation du véhicule 1. La donnée de régulation choisie finalement correspond à celle qui conduit à une consigne de commande la moins sensible à ces changements de configurations d'utilisation du véhicule 1. En d'autres termes, la donnée de régulation choisie est celle qui permet de limiter les écarts de performance entre les différentes configurations d'utilisation. En pratique, cela correspondra à une dispersion minimale de la performance en fonction des différentes configurations d'utilisation.

Finalement, la donnée de régulation choisie est utilisée afin de générer la consigne de commande de trajectoire du véhicule 1. Cette consigne de commande est alors implantée dans l'unité de commande 5 du véhicule 1 pour la mise en oeuvre de la loi de commande de la trajectoire de ce véhicule afin de le réorienter ou de le maintenir dans sa voie de circulation.

En pratique, la donnée de régulation utilisée pour la loi de commande de trajectoire est déterminée avant la mise en circulation du véhicule 1, lors de sa construction. Cette donnée n'est en général pas modifiée après la mise en circulation du véhicule 1.

Le choix de la donnée de régulation doit être effectué pour chaque vitesse de déplacement du véhicule 1 considérée.

A ce stade, on pourra noter que si aucune valeur de donnée de régulation Ks n'est validée en conditions réelles, le metteur au point devra essayer un autre critère d'optimisation (une autre marge de robustesse par exemple), ou essayer de générer la donnée de régulation Ks à partir d'un modèle véhicule réévalué (par exemple en augmentant la masse virtuelle du véhicule utilisée) ou en mettant à jour les paramètres du véhicule (masse, pneus, centre de gravité, direction assistée, etc.).

A ce stade, on peut également définir la fonction de transfert H précitée, laquelle permettra en complément d'évaluer les marges de robustesse issues de la donnée de régulation choisie. Comme représenté sur la figure 6, la fonction de transfert *H* (également appelée transfert de boucle *H)* est définie entre l'entrée du système à piloter, ici l'élément 22, et la sortie du système qui permet de réguler, ici l'élément 20 lorsque la boucle de régulation est ouverte.

Les marges de robustesse peuvent alors être évaluées en traçant le diagramme de Bode associé à cette fonction de transfert H.

Les figures 7 et 8 représentent respectivement les courbes de gain et de phase pour un exemple de fonction de transfert H. Ces figures permettent de visualiser la marge de gain, notée $M_G$ sur la figure 7, et la marge de phase, notée $M_\varphi$ sur la figure 8, dans le cadre de cet exemple (c'est-à-dire issues de la donnée de régulation Ks choisie).

Comme décrit précédemment, la donnée de régulation Ks choisie et validée pour générer la consigne de commande a été initialement déterminée de manière à optimiser une marge de robustesse (parmi la marge de gain, la marge de phase ou la marge de retard).

L'utilisation du diagramme de Bode de la fonction de transfert H permet finalement d'évaluer la manière dont la marge de robustesse concernée a été effectivement optimisée avec le choix de la donnée de régulation Ks.

## Revendications

**1.** Procédé d'élaboration d'une consigne de commande prédictive apte à être implantée dans une unité de commande (5) de trajectoire d'un véhicule automobile (1), le procédé comprenant, pour au moins une vitesse de déplacement donnée du véhicule automobile (1) sur une voie de circulation, des étapes de :

- détermination d'une pluralité de données de régulation (Ks), chaque donnée de régulation (Ks) permettant, à partir d'au moins une donnée d'entrée, de générer la consigne de commande qui satisfait un paramètre de robustesse, et chaque donnée de régulation (Ks) étant associée à une configuration d'utilisation particulière dudit véhicule automobile (1),
- identification d'au moins une donnée de régulation (Ks) parmi la pluralité de données de régulation (Ks) déterminées, en fonction d'un résultat d'une simulation de trajectoire du véhicule automobile (1) sur la voie de circulation, et
- utilisation de ladite au moins une donnée de régulation identifiée pour la commande de trajectoire dudit véhicule automobile (1).

**2.** Procédé d'élaboration selon la revendication 1, dans lequel le paramètre de robustesse comprend une marge de phase ou une marge de gain ou une marge de retard.

**3.** Procédé d'élaboration selon la revendication 1 ou 2, dans lequel l'étape d'identification comprend les étapes de :

- projection de la pluralité de données de régulation (Ks) déterminées sur un espace défini par un paramètre de robustesse et par un paramètre de performance,
- sélection d'au moins une donnée de régulation (Ks) parmi la pluralité de données de régulation (Ks) déterminées projetées, en fonction de leur projection sur ledit espace, de manière à satisfaire au moins un critère de sélection pour le paramètre de robustesse et/ou pour un paramètre de performance.

**4.** Procédé d'élaboration selon la revendication 3, dans lequel le critère de sélection privilégie le paramètre de performance par rapport au paramètre de robustesse.

**5.** Procédé d'élaboration selon la revendication 3, dans lequel le critère de sélection privilégie le paramètre de robustesse par rapport au paramètre de performance.

**6.** Procédé d'élaboration selon la revendication 3, dans lequel le critère de sélection est défini comme un compromis entre le paramètre de robustesse et le paramètre de performance.

**7.** Procédé d'élaboration selon l'une quelconque des revendications 1 à 6, dans lequel la donnée de régulation (Ks) identifiée est choisie de manière à ce que la consigne de commande soit la moins sensible à des changements de configuration d'utilisation du véhicule automobile (1).

**8.** Procédé d'élaboration selon la revendication 7, dans lequel au moins deux configurations d'utilisation différentes du véhicule automobile sont associées à des poids de chargement ou à des répartitions de poids de chargement

différents dans ledit véhicule automobile (1).

**9.** Procédé d'élaboration selon la revendication 7 ou 8, dans lequel au moins deux configurations d'utilisation différentes du véhicule automobile (1) sont associés à la présence d'équipements différents sur ledit véhicule automobile (1).

**10.** Procédé d'élaboration selon l'une quelconque des revendications 1 à 9, dans lequel l'étape d'utilisation consiste à implanter la consigne de commande prédictive dans l'unité de commande (5) du véhicule automobile (1).

**Patentansprüche**

**1.** Verfahren zur Entwicklung eines prädiktiven Steuersollwerts, der in eine Einheit zur Steuerung (5) der Trajektorie eines Kraftfahrzeugs (1) implantiert werden kann, wobei das Verfahren für mindestens eine gegebene Fahrgeschwindigkeit des Kraftfahrzeugs (1) auf einer Fahrspur folgende Schritte beinhaltet:

- Bestimmen einer Vielzahl von Regelungsdaten ($K_S$), wobei jedes Regelungsdatenelement ($K_S$) anhand mindestens eines Eingangsdatenelements die Erzeugung des Steuersollwerts gestattet, der einen Robustheitsparameter erfüllt, und wobei jedes Regelungsdatenelement ($K_S$) mit einer bestimmten Nutzungskonfiguration des Kraftfahrzeugs (1) assoziiert ist,
- Identifizieren mindestens eines Regelungsdatenelements ($K_S$) aus der Vielzahl von bestimmten Regelungsdaten ($K_S$) in Abhängigkeit von einem Ergebnis einer Simulation der Trajektorie des Kraftfahrzeugs (1) auf der Fahrspur und
- Nutzen des mindestens einen identifizierten Regelungsdatenelements für das Steuern der Trajektorie des Kraftfahrzeugs (1).

**2.** Entwicklungsverfahren nach Anspruch 1, wobei der Robustheitsparameter einen Phasenspielraum oder einen Verstärkungsspielraum oder einen Verzögerungsspielraum beinhaltet.

**3.** Entwicklungsverfahren nach Anspruch 1 oder 2, wobei der Schritt des Identifizierens die folgenden Schritte beinhaltet:

- Projizieren der Vielzahl von bestimmten Regelungsdaten ($K_S$) auf einen Raum, der durch einen Robustheitsparameter und einen Leistungsparameter definiert wird,
- Auswählen mindestens eines Regelungsdatenelements ($K_S$) aus der Vielzahl von projizierten bestimmten Regelungsdaten ($K_S$) in Abhängigkeit von ihrer Projizierung auf den Raum, sodass mindestens ein Auswahlkriterium für den Robustheitsparameter und/oder für einen Leistungsparameter erfüllt wird.

**4.** Entwicklungsverfahren nach Anspruch 3, wobei das Auswahlkriterium den Leistungsparameter gegenüber dem Robustheitsparameter vorzieht.

**5.** Entwicklungsverfahren nach Anspruch 3, wobei das Auswahlkriterium den Robustheitsparameter gegenüber dem Leistungsparameter vorzieht.

**6.** Entwicklungsverfahren nach Anspruch 3, wobei das Auswahlkriterium als ein Kompromiss zwischen dem Robustheitsparameter und dem Leistungsparameter definiert ist.

**7.** Entwicklungsverfahren nach einem beliebigen der Ansprüche 1 bis 6, wobei das identifizierte Regelungsdatenelement ($K_S$) so gewählt wird, dass der Steuersollwert gegenüber Änderungen der Nutzungskonfiguration des Kraftfahrzeugs (1) am unempfindlichsten ist.

**8.** Entwicklungsverfahren nach Anspruch 7, wobei mindestens zwei unterschiedliche Nutzungskonfigurationen des Kraftfahrzeugs mit unterschiedlichen Ladegewichten oder Ladegewichtsverteilungen in dem Kraftfahrzeug (1) assoziiert sind.

**9.** Entwicklungsverfahren nach Anspruch 7 oder 8, wobei mindestens zwei unterschiedliche Nutzungskonfigurationen des Kraftfahrzeugs (1) mit dem Vorhandensein von unterschiedlichen Ausrüstungen an dem Kraftfahrzeug (1) assoziiert sind.

10. Entwicklungsverfahren nach einem beliebigen der Ansprüche 1 bis 9, wobei der Schritt des Nutzens darin besteht, den prädiktiven Steuersollwert in die Steuereinheit (5) des Kraftfahrzeugs (1) zu implantieren.

## Claims

1. Method for developing a predictive control setpoint that can be implanted in a trajectory control unit (5) of a motor vehicle (1), the method comprising, for at least one given speed of movement of the motor vehicle (1) on a traffic lane, steps of:

   - determining a plurality of regulation data ($K_S$), each regulation datum ($K_S$) making it possible, from at least one input datum, to generate the command setpoint which satisfies a robustness parameter, and each regulation datum ($K_S$) being associated with a particular configuration of use of said motor vehicle (1),
   - identifying at least one regulation datum ($K_S$) out of the plurality of determined regulation data ($K_S$), as a function of a result of a simulation of the trajectory of the motor vehicle (1) on the traffic lane, and
   - using said at least one identified regulation datum to control the trajectory of said motor vehicle (1).

2. Development method according to Claim 1, wherein the robustness parameter comprises a phase margin or a gain margin or a delay margin.

3. Development method according to Claim 1 or 2, wherein the identification step comprises the steps of:

   - projecting the plurality of determined regulation data ($K_S$) onto a space defined by a robustness parameter and by a performance parameter,
   - selecting at least one regulation datum ($K_S$) out of the plurality of projected determined regulation data ($K_S$), as a function of their projection onto said space, so as to satisfy at least one selection criterion for the robustness parameter and/or for a performance parameter.

4. Development method according to Claim 3, wherein the selection criterion prioritizes the performance parameter over the robustness parameter.

5. Development method according to Claim 3, wherein the selection criterion prioritizes the robustness parameter over the performance parameter.

6. Development method according to Claim 3, wherein the selection criterion is defined as a trade-off between the robustness parameter and the performance parameter.

7. Development method according to any one of Claims 1 to 6, wherein the identified regulation datum ($K_S$) is chosen in such a way that the control setpoint is the least sensitive to changes of configuration of use of the motor vehicle (1).

8. Development method according to Claim 7, wherein at least two different configurations of use of the motor vehicle are associated with different loading weights or distributions of loading weights in said motor vehicle (1) .

9. Development method according to Claim 7 or 8, wherein at least two different configurations of use of the motor vehicle (1) are associated with the presence of different equipment on said motor vehicle (1).

10. Development method according to any one of Claims 1 to 9, wherein the usage step consists in implanting the predictive control setpoint in the control unit (5) of the motor vehicle (1).

Fig.1

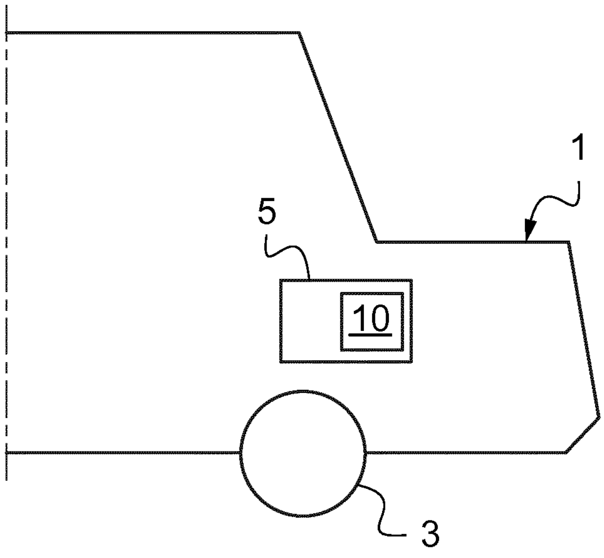


Fig.2

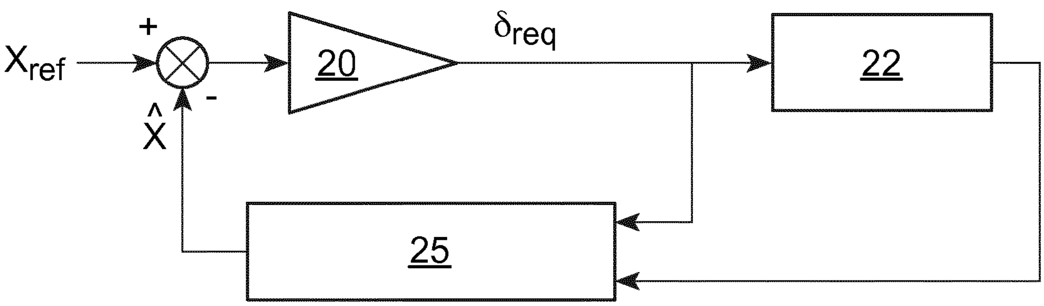


Fig.6

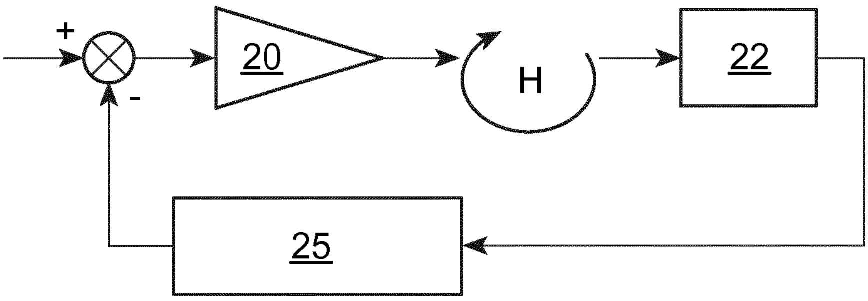

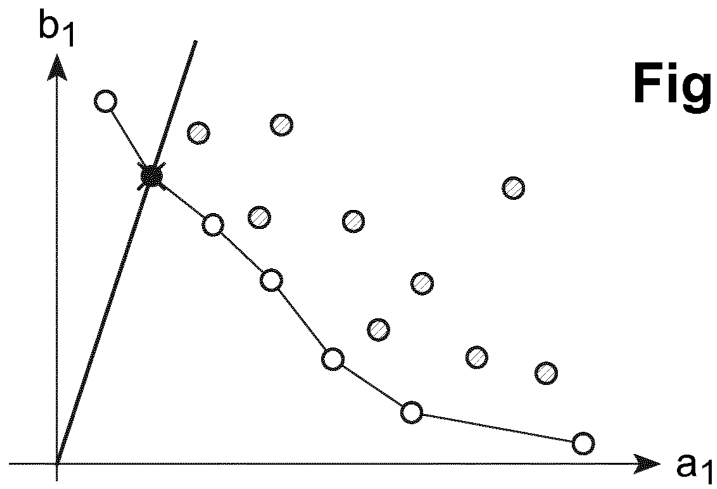


Fig.3

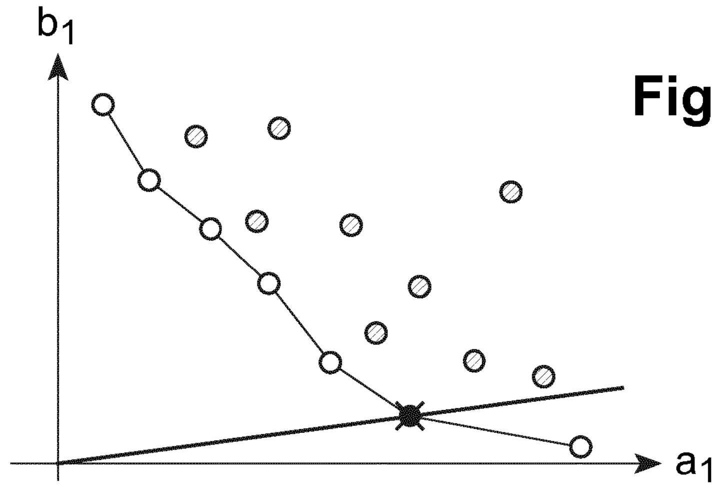


Fig.4

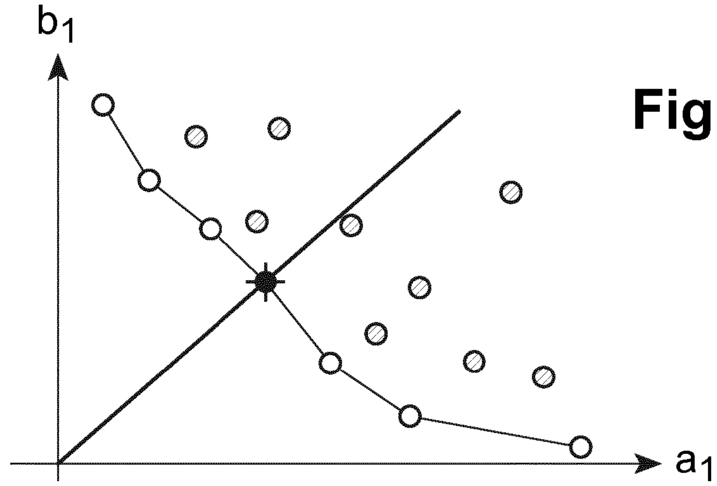


Fig.5

Fig.7

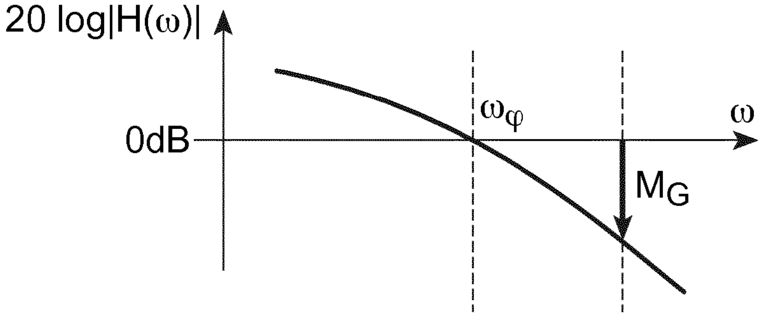


Fig.8

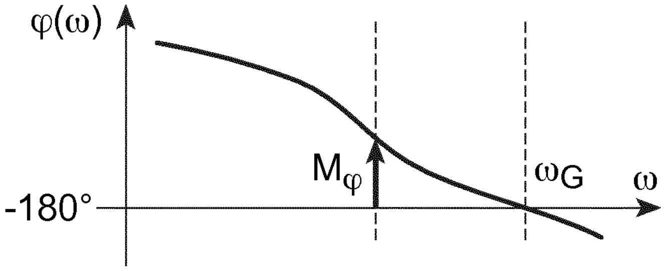


Fig.9

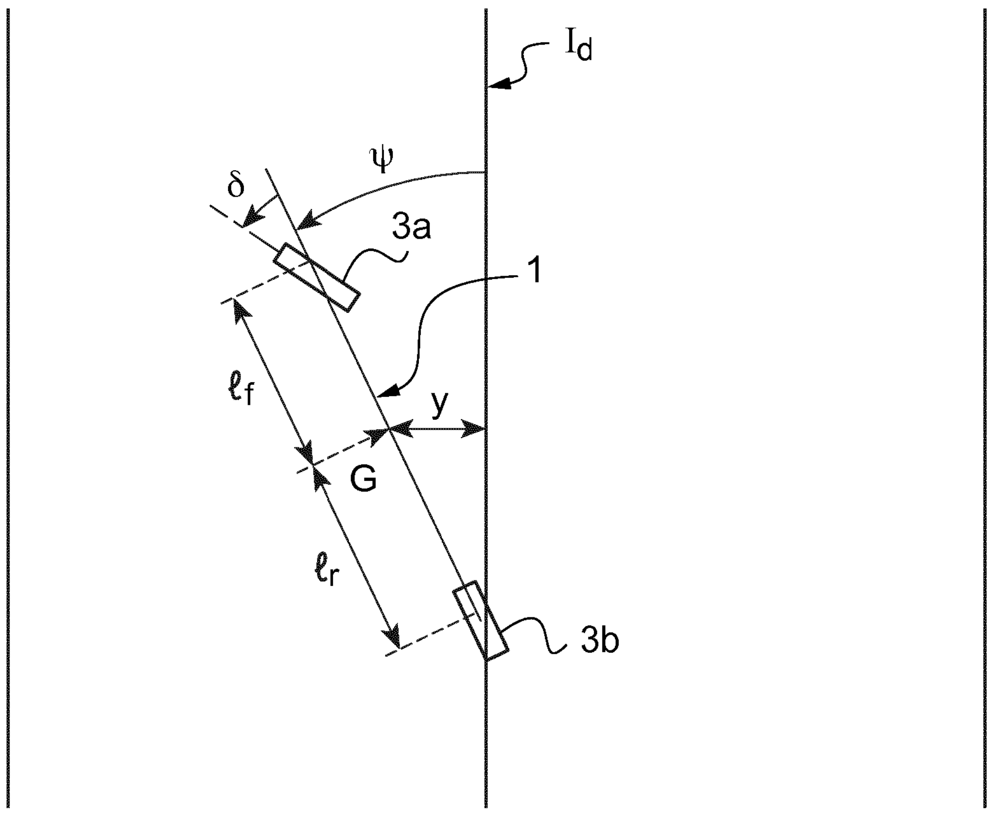

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- FR 3050161


### Littérature non-brevet citée dans la description


- **M. ZAKARIA.** *Dynamic Curvature Path Tracking Control for Autonomous Vehicle: Experimental Results*
- **A. SHAOUT.** *A Nonlinear Optimal Four Wheels Steering Controller*
- **L. MENHOUR.** *Vehicle control based on a LPV control and a nonlinear control to detect critical driving situation due to high dynamic loads*